# EUROPÄISCHE PATENTSCHRIFT

(11) **EP 1 541 424 B1**
(45) Veröffentlichungstag und Bekanntmachung des Hinweises auf die Patenterteilung: **30.01.2008**
(21) Anmeldenummer: 04027239.5
(22) Anmeldetag: 17.11.2004
(51) Int. Cl.: B60R 19/34, F16F 7/12, B62D 21/15

(54) **Crashelement in Form eines Hohlprofils**
Crash element shaped as a hollow profile
Un élément d'absorption de choc en form profilé creux

(30) Priorität: 13.12.2003 DE 10358492
(43) Veröffentlichungstag der Anmeldung: 15.06.2005
(73) Patentinhaber: Daimler AG, 70327 Stuttgart (DE)
(72) Erfinder: Aue, Thomas, 22297 Hamburg (DE); Schwarz, Stefan, 44536 Lünen (DE)

(56) Entgegenhaltungen:
- WO-A-00/03895
- DE-A1- 19 625 295
- FR-A- 2 785 956
- US-A- 5 566 777

## Beschreibung

Die vorliegende Erfindung betrifft ein Crashelement, insbesondere für ein Kraftfahrzeug, in Form eines Hohlprofils gemäß dem Oberbegriff des Anspruchs 1 sowie ein zugehöriges Verfahren zur Herstellung des Crashelements.

Bei Kraftfahrzeugen herkömmlicher Bauart ist es bekannt, Crashelemente im Rahmen einer Tragstruktur oder in Verbindung mit Stoßfängern einzusetzen, um im Crashfall einen gewissen Anteil der Crashenergie zu absorbieren und damit das Kraftfahrzeug vor größeren Beschädigungen, wie beispielsweise einem Verziehen der Tragstruktur, zu schützen. Übersteigt die beim Crashfall auftretende Crashenergie die von dem Crashelement bzw. einer Crashbox aufnehmbare bzw. absorbierbare Energie nicht, so muss bei einer Instandsetzung des Fahrzeugs nach dem Unfall lediglich der Stoßfänger bzw. das.Crashelement ausgetauscht werden. Darüber hinaus gehende Reparaturen sind üblicherweise nicht erforderlich. Crashelemente können beispielsweise durch quer zur Aufprallrichtung in die Tragstruktur eingekerbte Faltsicken realisiert werden, welche im Crashfall ziehharmonikaartig zusammengeschoben bzw. gefaltet werden und dadurch Energie absorbieren.

Die US 5,566,777 A zeigt ein Stauchrohr zur Aufnahme von Stossenergie bei einem Kraftfahrzeug. Hierbei wird durch Einbringen einer umlaufenden Sicke eine Sollbruchstelle geschaffen, bei der bei einem Zusammenstoss das Stauchrohr reißt und zwei separate ineinander sich schiebende Bauteile bildet. Das Stauchrohr ist dabei so ausgebildet, dass das beim Zusammenstoss eintauchende Bauteil einen Außendurchmesser besitzt, der in etwa gleich dem Innendurchmesser des aufnehmenden Bauteils ist, so dass beim Einschieben eine definierte Reibungsenergie vernichtet wird.

Ein teleskopierendes Energieabsorptionsrohr ist auch in der FR 2 785 956 A beschrieben. Das Rohr setzt sich aus mehreren hohlzylindrischen koaxial zueinander angeordneten und miteinander einstückig verbundenen Abschnitten zusammen, wobei der Außendurchmesser des jeweils in den aufnehmenden Abschnitt eintauchenden Abschnitts etwas größer als der Innendurchmesser, jedoch deutlich kleiner als der Außendurchmesser des aufnehmenden Abschnitts ist. Einerseits bildet sich dadurch ein Versatz aus, der eine Sollbruchstelle im Falle eines Zusammenstosses bildet. Andererseits wird nach dem Reißen des jeweiligen Abschnitts durch die erwähnte Ausbildung der aufnehmende Abschnitt vom eintauchenden Abschnitt aufgeweitet, wodurch Stossenergie vernichtet wird. Aufgrund des am Außenumfang ausgebildeten Wulstes des eintauchenden Abschnitts tritt Reibung auf, wodurch zusätzlich Stossenergie abgebaut wird.

Des Weiteren ist der WO 00/03895 ein Energieabsorptionssystem entnehmbar, das einen hohlen knochenförmigen und durch Hydroformen hergestellten Pralltopf beinhaltet. Beim Aufprall verformt sich dieser derart, dass der schmalere Mittelteil praktisch unverformt bleibt, während sich die breiteren Enden in Stoßrichtung, also quasi axial verformen. Hierdurch wird der Mittelteil unter Ausbildung eines ringförmigen Spaltes an beiden Endbereichen von den Enden koaxial umgeben.

Aus der DE 195 10 763 C2 ist ein Fahrzeugaufbau mit einem Montagerahmen bekannt. Der Montagerahmen besteht aus vorderen und hinteren Querträgern und aus zwei diese verbindenden und mit Montagepunkten zur Aufnahmen von Motor, Getriebe und/oder Achsaggregaten versehenen Längsträgern und ist mit einem Bodenrahmen des Fahrzeugs verschraubt. Einer der Querträger dient dabei als Träger für einen Stoßfänger. Die Abstützpunkte des Montagerahmens am Fahrzeugbodenrahmen sind im Bereich des Querträgers angeordnet, der dem als Stoßfängerträger dienenden Querträger gegenüberliegt, wobei zwischen den Montagepunkten und dem vorderen Querträger Deformationsbereiche in den Längsträgern angeordnet sind. Die Deformationsbereiche sind mit mehreren parallel zueinander angeordneten Längsschlitzen versehen. Durch diese Maßnahme bildet der Montagerahmen einen Schutzrahmen für die in ihm gelagerten Aggregate, da ein auf den Stoßfänger ausgeübter Stoß von einem Querträger des Montagerahmens aufgefangen werden kann und nicht auf die Aggregate wirkt.

Aus der DE 38 15 510 A1 ist eine Bodengruppe für ein Kraftfahrzeug bekannt. Bei der Bodengruppe ist an einem Bodenblech mindestens eine Entkopplungssicke vorgesehen, die etwa parallel zu einem Querträger mit geringem Abstand zu diesem verläuft, wobei die Breite der Entkopplungssicke den am Querträger auftretenden elastischen Durchbiegungen angepasst ist. Die Entkopplungssicke kann dabei bei der Herstellung des Bodenbleches mit eingeformt werden. Tritt am Querträger nun beispielsweise in Folge eines Heckaufpralles eine elastische Durchbiegung auf, so kann diese durch die Entkopplungssicke kompensiert werden, so dass keine bleibenden Deformationen im Bodenblech auftreten.

Aus der DE 195 11 868 A1 ist eine Stoßstange für eine zwei Längsträger aufweisende Fahrzeugkarosserie bekannt. Diese besteht aus einem sich über die Karosseriebreite erstreckenden Biegeträger und zwei im Abstand voneinander auf dessen Rückseite rechtwinklig abstehenden Verformungsgliedern, die fest mit dem Biegeträger und den Längsträgern verbunden sind. Zur Schaffung einer Stoßstange mit hohem Energieabsorptionsvermögen sind die Verformungsglieder verformungssteifer ausgebildet als der Biegeträger, so dass sie sich erst am Ende des Deformationsvermögens des Biegeträgers unter weiterer Energieaufnahme verformen.

Desweiteren ist aus der DE 1 405 867 ein Kraftfahrzeug mit einem Tragrahmen bekannt. An einem vorderen und einem hinteren Ende des Tragrahmens sind als Deformationsglieder ausgebildete Endteile angeschlossen, welche eine Schwachstelle besitzen, deren geometrische Mittellinie bzw. deren Momentenachse durch entsprechende Knotenpunkte des Tragrahmens verläuft. Die deformierbaren Endteile leiten dabei bei einem Aufprall die Stoßkräfte auf die stärkste Stelle des Tragwerkes, wobei die Deformation der Endteile selbst bis zu einer vorbestimmten Querebene des Kraftfahrzeuges zugelassen wird, um den Schutz der Fahrgäste zu erhöhen.

Schließlich ist aus der DE 199 15 237 A1 ein Deformationselement aus einem duktilen metallischen Leichtwerkstoff bekannt.

Die vorliegende Erfindung beschäftigt sich mit dem Problem, für ein Crashelement eingangs erwähnter Art eine verbesserte Ausführungsform anzugeben, welche insbesondere einfach und kostengünstig herstellbar ist.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, ein Crashelement zu schaffen, welches im Unterschied zu herkömmlichen Crashelementen zunächst bei einer vorbestimmten Crashkraft an einer Sollbruchstelle bricht und danach energieabsorbierend zusammenschiebbar ist. Das Crashelement ist dabei in Form eines Hohlprofils ausgebildet, welches zumindest einen umlaufenden Bereich besitzt, in welchem die Hohlprofilwandung einen im Wesentlichen springenden und treppenartigen Versatz aufweist. Dieser Versatz bildet eine lokale Schwachstelle bzw. eine Sollbruchstelle, welche im Crashfall bei einer vorbestimmten Crashkraft aufbricht. Nach dem Brechen der Sollbruchstelle schieben sich die entstandenen Hohlprofilteile im Bereich des Versatzes teleskopartig ineinander. Die an der Sollbruchstelle getrennten Hohlprofilteile erfordern zum Ineinanderschieben aufgrund der hohen Reibung Kraft, so dass zusätzlich zur Bruchenergie nachfolgend erhebliche Reibungsenergie aufgewendet werden muss. Sowohl die Bruchenergie als auch die Reibungsenergie wirken energieabsorbierend und vermindern somit größere Schäden an einem Kraftfahrzeug beispielsweise durch eine Energieübertragung auf den Tragrahmen. Zusätzlich deformieren sich die Hohlprofilteile beim Zusammenschieben, so dass zusätzlich Crashenergie in Deformationsenergie umgewandelt wird. Durch die Aufweitung der Hülse bzw. durch die Verjüngung des einfahrenden Hohlprofilteils wird ein Großteil der Crashenergie in Deformationsenergie umgewandelt und dadurch absorbiert.

Die erfindungsgemäßen Crashelemente sind dabei einfach und kostengünstig herzustellen, wodurch auch die Instandsetzungskosten nach einem Unfall im Vergleich zu herkömmlichen Crashboxen deutlich reduziert werden können. Kleinere Aufprallkräfte, welche nicht zu einem Bruch der Sollbruchstelle führen werden dabei elastisch aufgenommen, so dass eine Reparatur des Fahrzeugs erst ab einer bestimmten Aufprallgeschwindigkeit und einer damit verbundenen Aufprallkraft erforderlich ist.

Durch eine entsprechende Ausbildung zumindest eines der im Crashfall entstehenden Hohlprofilteile im Bereich des Versatzes, beispielsweise durch eine konusartige oder kegelstumpfartige Ausbildung, kann zudem erreicht werden, dass mit zunehmendem Stauchungsweg die erforderliche Stauchungskraft zunimmt. Dies ermöglicht durch eine einfache Änderung der Hohlprofilgeometrie oder beispielsweise der Wandstärken im Bereich des Versatzes eine Anpassung des Energieabsorptionsvermögens des Crashelementes an entsprechende Anforderungen, beispielsweise eines Lastkraftwagens oder eines Personenkraftwagens.

Gemäß einer besonders bevorzugten Ausführungsform der erfindungsgemäßen Lösung ist ein Querschnitt des Hohlprofils einerseits des Versatzes aufgeweitet und/oder anderseits des Versatzes verjüngt. Dies bewirkt, dass beim Ineinanderschieben der Hohlprofilteile Deformationsenergie aufgebracht werden muss. Hierdurch kann in überraschend einfacher Weise durch eine entsprechende Änderung der Hohlkörpergeometrie im Bereich des Versatzes Einfluss auf das spätere Energieabsorptionsvermögen und damit Einfluss auf das spätere Crashverhalten des Crashelementes genommen werden.

Entsprechend einer vorteilhaften Weiterbildung der Erfindung liegt das Maß des Versatzes bei zumindest einer halben Wandstärke des Hohlprofils. Hierdurch wird gewährleistet, dass die Schwachstelle des Hohlprofiles tatsächlich im Bereich des Versatzes liegt und dadurch im Crashfall das Hohlprofil auch an dieser Stelle bricht, so dass ein vorher, beispielsweise durch eine nummerische Simulation, errechnetes Crashverhalten eintritt.

Gemäß einer besonders vorteilhaften Weiterbildung kann das Hohlprofil als Träger für eine Stoßfängeranordnung ausgebildet sein. Das Crashelement stellt dabei beispielsweise eine Verbindung zwischen Stoßfängeranordnung und Tragrahmenstruktur des Kraftfahrzeuges dar, so dass nach einem Crashfall die Stoßfängeranordnung samt dem daran angeschlossenen Crashelement von der Tragrahmenstruktur entfernt werden kann und durch eine neue ersetzt werden kann. Diese Ausführungsvariante gewährleistet somit neben einer einfachen Instandsetzung nach einem Crashfall, dass keine schädigenden Stöße beim Crash selbst auf die Tragrahmenstruktur des Fahrzeuges übertragen werden, da diese bereits zuvor im Crashelement in Reibungs- und Deformationsenergie umgewandelt werden.

Entsprechend einer weiteren günstigen Ausführungsform wird das Crashelement durch Innenhochdruck-Umformen eines Hohlprofilrohlings erzeugt. Innenhochdruck-Umformverfahren sind weit verbreitet und langjährig erprobt und ermöglichen dadurch eine einfache und kostengünstige Herstellung von Hohlprofilen. Durch Austauschen der formgebenden Matrizen ist es möglich, das Hohlprofil, insbesondere im Bereich des Versatzes, exakt an die Anforderungen des jeweiligen Fahrzeugtyps anzupassen. Gleichzeitig sichert das Innenhochdruck-Umformverfahren die Herstellung von Hohlprofilteilen mit hoher Qualität und guter Reproduzierbarkeit.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Dabei zeigen:
- Fig. 1: einen Längsschnitt durch ein erfindungsgemäßes Crashelement,
- Fig. 2: eine Darstellung wie in Fig. 1, jedoch bei einer anderen Ausführungsform,
- Fig. 3: einen Längsschnitt durch ein Crashelement nach einem Crashfall,
- Fig. 4: eine Darstellung wie in Fig. 1, jedoch bei einer weiteren Ausführungsform,
- Fig. 5: eine Darstellung wie in Fig. 4, jedoch bei einer anderen Ausführungsform.

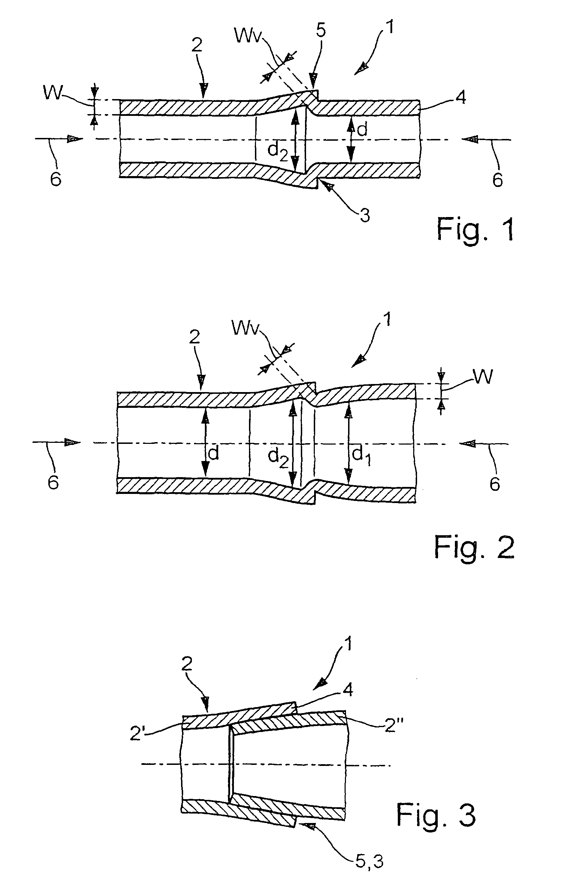

Entsprechend Fig. 1 weist ein Crashelement 1, welches in Form eines Hohlprofils 2 ausgebildet ist, zumindest ein umlaufenden Bereich 3 auf, in welchem die Hohlprofilwandung 4 einen im wesentlichen springenden muffen-/treppenartigen Versatz 5 besitzt. Das Hohlprofil 2 kann dabei im Querschnitt beispielsweise eine kreisartige oder eine eckige Form aufweisen und erhält seine in den Fig. 1 und 2 dargestellte Form mittels dem Innenhochdruck-Umformverfahren, auf welches an späterer Stelle noch näher eingegangen wird.

Der treppenartige Versatz 5 ist dabei als Sollbruchstelle ausgebildet, welche in einem Crashfall, also bei einem Überschreiten einer vorbestimmten Crashkraft 6 aufbricht. Das Aufbrechen des Versatzes 5 wird durch ein Überschreiten der maximal ertragbaren Schubspannung in diesem Bereich bewirkt, wobei sich das Crashelement 1 bis zum Erreichen der Crashkraft 6, also beispielsweise bei geringen Aufprallkräften, elastisch verformt, wogegen es sich beim Überschreiten der Crashkraft 6 plastisch verformt. Beim Überschreiten der Crashkraft 6 werden aus dem ursprünglich einteiligen und einstückigen Hohlprofil 2 (vgl. Fig. 1 und 2) zwei Hohlprofilteile 2' und 2" (vgl. Fig. 3), welche sich dann im Bereich des Versatzes 5 energieabsorbierend und teleskopartig ineinander schieben.

Gemäß Fig. 1 ist ein Querschnitt bzw. ein Durchmesser d₂ des Hohlprofils 2 einerseits des Versatzes 5 im Vergleich zum normalen Durchmesser d des Hohlprofils 2 aufgeweitet, wogegen er anderseits des Versatzes 5 den ursprünglichen Durchmesser d bzw. den ursprünglichen Querschnitt besitzt. Demgegenüber ist gemäß Fig. 2 der Querschnitt bzw. Durchmesser d₁ des Hohlprofils 2 einerseits des Versatzes 5 aufgeweitet, und gleichzeitig ein Durchmesser d₂ anderseits des Versatzes 5 verjüngt. Generell ist aber auch denkbar, dass das Hohlprofil 2 einerseits des Versatzes 5 den ursprünglichen Querschnitt bzw. Durchmesser d aufweist und anderseits des Versatzes 5 einen verjüngten Querschnitt bzw. Durchmesser d₂ besitzt. Unabhängig von den verschiedenen Ausführungsformen ist dabei gewährleistet, dass beim Überschreiten der Crashkraft 6 der Versatz 5 an einer Schwachstelle, nämlich der Sollbruchstelle, bricht und danach die entstehenden Hohlprofilteile 2' und 2'' gemäß Fig. 3 ineinander einschiebbar sind.

Um zu gewährleisten, dass beim Überschreiten der Crashkraft 6 das Hohlprofil 2 im Bereich des Versatzes 5 bzw. im Bereich der Sollbruchstelle bricht, ist vorgesehen, dass das Maß wᵥ, d.h. die Wandstärke des Hohlprofiles 2 im Bereich des Versatzes 5, bei einem Bruchteil der Wandstärke w des sonstigen Hohlprofiles 2 liegt. Das Wandstärkenmaß wᵥ ist dabei so gewählt, dass kleinere Stöße bzw. Kräfte elastisch übertragen werden können, ohne dass es zu einer Schädigung bzw. zu einem Bruch des Versatzes 5 kommt.

Das Crashelement 1 verwirklicht somit in konstruktiv sehr einfacher Weise verschiedene energieabsorbierende Wirkungsmechanismen. Eine erste Energieabsorption wird erreicht, wenn die Crashkraft 6 so groß ist, dass die Sollbruchstelle am Versatz 5 bricht und ein Teil der Crashkraft 6 in eine Scherkraft zum Abscheren bzw. Aufbrechen der Sollbruchstelle umgewandelt wird.

Im weiteren Crashverlauf wird gemäß Fig. 3 das Hohlprofilteil 2" in das Hohlprofilteil 2' unter Energieabsorption eingeschoben. Die energieabsorbierende Wirkung wird dabei einerseits durch Reibung zwischen den beiden Hohlprofilteilen 2' und 2" erzielt und andererseits durch eine Deformation, beispielsweise eine Aufweitung des Hohlprofilteils 2' und/oder eine Verjüngung des anderen Hohlprofilteils 2". Dabei ist denkbar, dass nach dem Aufbrechen der Sollbruchstelle durch eine entsprechende Ausformung eines Bereiches um den Versatz 5 mit zunehmendem Ineinanderschieben der Hohlprofilteile 2' und 2" eine gleichbleibende, eine stetig zunehmende oder eine überproportional zunehmende Arbeit verrichtet werden muss.

Prinzipiell ist auch denkbar, dass das Hohlprofilteil 2 mehrere in Reihe geschaltete Sollbruchstellen bzw. Versätze 5 entlang einer Längsachse 7 aufweist, wodurch sich ein Deformationsweg bzw. eine bei einem bestimmten Deformationsweg zu leistende Deformationsarbeit exakt vorausbestimmen lassen. Dies bietet die Möglichkeit, dass das Crashelement 1 durch eine unterschiedliche Anzahl von Versätzen 5 bzw. eine unterschiedliche Ausgestaltung der Versätze 5 an unterschiedlichste Anforderungen angepasst werden kann.

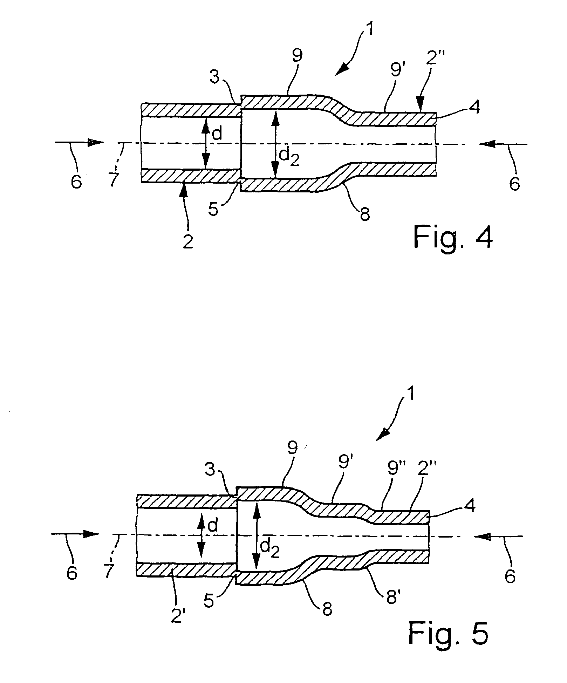

In Fig. 4 ist ein Hohlprofil 2 gezeigt, das einerseits der Sollbruchstelle einen sich axial erstreckenden Bereich 9 aufweist, in welchem das Hohlprofilteil 2" einen konstanten Durchmesser d₂ besitzt. Anschließend an diesen Bereich 9 auf der dem Versatz 5 abgewandten Seite folgt eine Verjüngung 8. Beim Crashfall schiebt sich somit das Hohlprofilteil 2' zunächst in den angrenzenden Bereich 9 des Hohlprofilteils 2", wobei Crashenergie in Reibungsenergie und gegebenenfalls in relativ kleinem Umfang in Deformationsenergie umgewandelt wird. Beim Erreichen der Verjüngung 8 wird erheblich mehr Deformationsenergie benötigt, um das Hohlprofilteil 2" beim weiteren Ineinanderschieben aufzuweiten und/oder um das Hohlprofilteil 2' zu verjüngen. Es wird somit ein Crashelement mit einem zweistufigen Energieabsorptionsvermögen geschaffen.

Fig. 5 zeigt eine Ausführungsform mit zwei Verjüngungen 8, 8' und insgesamt drei Bereichen 9, 9', 9" mit jeweils gleichem Durchmesser, wodurch ein insgesamt dreistufiges Crashverhalten bewirkt wird. Generell sind noch weitere nicht eingezeichnete Verjüngungen 8 denkbar, wobei die zwischen den Verjüngungen 8, 8'etc. liegenden Bereiche 9, 9' und 9" etc. jeweils konstante oder abnehmende Durchmesser aufweisen können und dadurch ein individuell beeinflussbares Crashverhalten geschaffen werden kann.

Das Crashelement 1 bzw. das Hohlprofil 2 kann dabei insbesondere als Teil einer nicht dargestellten Tragstruktur eines Kraftfahrzeuges und/oder als Träger für eine ebenfalls nicht dargestellte Stoßfängeranordnung ausgebildet sein. Letzeres bietet beispielsweise den Vorteil, dass nach einem Crashfall die Stoßfängeranordnung samt dem teleskopartig ineinander geschobenen Crashelement 1 ausgetauscht werden kann, ohne das eine Tragstruktur des Kraftfahrzeuges beschädigt wird, wodurch sich die Kosten der Reparatur nach einem Crashfall reduzieren lassen.

Um das Crashelement 1 bzw. das Hohlprofil 2 mit dem umlaufenden Bereich 3 bzw. dem treppenartigen Versatz 5 in möglichst einfacher und damit kostengünstiger Weise herzustellen, ist vorgesehen, dieses durch Innenhochdruck-Umformen eines Hohlprofilrohlings zu erzeugen. Durch eine entsprechende, nicht dargestellte Ausgestaltung einer formgebenden Matrizenwand des Innenhochdruck-Umformwerkzeugs können dabei nahezu beliebige Versätze 5 bzw. Versatzbereiche hergestellt werden. Insbesondere lassen sich mit dem Innenhochdruck-Umformverfahren Hohlprofile 2 mit gleichbleibend hoher Qualität bzw. Reproduzierbarkeit erzeugen, was für ein gleichbleibendes Crashverhalten des Crashelementes 1 besonders wichtig ist.

Zusammenfassend lassen sich die wesentlichen Merkmale der erfindungsgemäßen Lösung wie folgt charakterisieren:

Die Erfindung sieht vor, ein Crashelement 1 in Form eines Hohlprofils 2 mit zumindest einem umlaufenden treppenartigen Versatz 5 auszubilden, wobei der Versatz 5 eine Sollbruchstelle darstellt, welche im Crashfall aufbricht und wobei nach Überschreiten einer vorbestimmten Crashkraft 6 die entstehenden Hohlprofilteile 2' und 2" im Bereich des Versatzes 5 energieabsorbierend und teleskopartig ineinander einschiebbar sind.

Das Crashelement 1 absorbiert somit im Crashfall auf zumindest drei unterschiedliche Wirkungsweisen die auftretende Crashenergie. Zunächst wird Crashenergie zum Aufbrechen der Sollbruchstelle benötigt, während im weiteren Verlauf Energie durch Aufweiten bzw. Verjüngen der beim Crashfall entstehenden Hohlprofilteile 2' und 2" absorbiert wird. Zusätzlich wird beim teleskopartigen Ineinandereinschieben der Hohlprofilteile 2' und 2" Energie durch Reibung in Wärme umgewandelt und somit vernichtet.

## Patentansprüche

1. Crashelement (1), insbesondere für ein Kraftfahrzeug, in Form eines Hohlprofils (2),
- wobei das Hohlprofil (2) zumindest einen umlaufenden Bereich (3) aufweist, in welchem die Hohlprofilwandung (4) einen im wesentlichen springenden muffen-/treppenartigen Versatz (5) aufweist,
- wobei der Versatz (5) als Sollbruchstelle ausgebildet ist, welche in einem Crashfall bei einer vorbestimmten Crashkraft (6) aufbricht,
- wobei im Crashfall entstehende Hohlprofilteile (2', 2") im Bereich des Versatzes (5) energieabsorbierend und telekospartig ineinander einschiebbar sind, **dadurch gekennzeichnet dass** der sich einschiebende Teil des Hohlprofils (2) einen Außendurchmesser besitzt, der gleich oder größer als der des außerhalb des aufgeweiteten Versatzbereiches liegenden Abschnitts des aufnehmenden Teils des Hohlprofils (2) ist.

2. Crashelement nach Anspruch 1,
**dadurch gekennzeichnet,**
**dass** ein Querschnitt (d) des Hohlprofils (2) einerseits des Versatzes (5) aufgeweitet ist und/oder andernseits des Versatzes (5) verjüngt ist.

3. Crashelement nach Anspruch 1 oder 2,
**dadurch gekennzeichnet,**
**dass** die Sollbruchstelle so beschaffen ist, dass sich das Crashelement (1) bis zum Erreichen der Crashkraft (6) elastisch verformt, wogegen es sich beim Überschreiten der Crashkraft (6) plastisch verformt.

4. Crashelement nach einem der Ansprüche 1 bis 3,
**dadurch gekennzeichnet,**
**dass** das Maß (wᵥ) des Versatzes (5) bei einem Bruchteil der Wandstärke (w) liegt.

5. Crashelement nach einem der Ansprüche 1 bis 4,
**dadurch gekennzeichnet,**
**dass** das Hohlprofil (2) als Teil einer Tragstruktur eines Kraftfahrzeugs ausgebildet ist.

6. Crashelement nach einem der Ansprüche 1 bis 5,
**dadurch gekennzeichnet,**
**dass** das Hohlprofil (2) als Träger für eine Stoßfängeranordnung ausgebildet ist.

7. Crashelement nach einem der Ansprüche 1 bis 6,
**dadurch gekennzeichnet,**
**dass** das Hohlprofil (2) durch Innenhochdruck-Umformung hergestellt ist.

8. Verfahren zum Herstellen eines Crashelements nach einem der Ansprüche 1 bis 7,
**dadurch gekennzeichnet,**
**dass** das Crashelement (1) durch Innenhochdruck-Umformen eines Hohlprofilrohlings erzeugt wird.

## Claims

1. Crash element (1), especially for a motor vehicle, in the form of a hollow profile (2),
wherein the hollow profile (2) has at least one enclosing region (3) in which the hollow profile wall (4) has a substantially projecting sleeve-like/step-like offset (5),
wherein the offset (5) is formed as a predetermined breaking point, which in the case of a crash breaks open under a predetermined crash force (6),
wherein hollow profile parts (2', 2'') that are created in the region of the offset (5) in the case of a crash can be pushed telescopically one into the other in an energy-absorbing manner,
**characterized in that** the pushing-in part of the hollow profile (2) has an outside diameter that is equal to or greater than that of the portion of the receiving part of the hollow profile (2) lying outside the widened offset region.

2. Crash element according to Claim 1, **characterized in that** a cross section (d) of the hollow profile (2) is widened on one side of the offset (5) and/or is tapered on the other side of the offset (5).

3. Crash element according to Claim 1 or 2, **characterized in that** the predetermined breaking point is designed in such a way that the crash element (1) deforms elastically until the crash force (6) is reached, whereas it deforms plastically when the crash force (6) is exceeded.

4. Crash element according to one of Claims 1 to 3, **characterized in that** the dimension (wᵥ) of the offset (5) is a fraction of the wall thickness (w).

5. Crash element according to one of Claims 1 to 4, **characterized in that** the hollow profile (2) is formed as part of a supporting structure of a motor vehicle.

6. Crash element according to one of Claims 1 to 5, **characterized in that** the hollow profile (2) is formed as a support for a bumper arrangement.

7. Crash element according to one of Claims 1 to 6, **characterized in that** the hollow profile (2) is produced by hydroforming.

8. Method for producing a crash element according to one of Claims 1 to 7, **characterized in that** the crash element (1) is produced by hydroforming of a hollow profile blank.

## Revendications

1. Elément d'absorption de chocs (1), notamment pour un véhicule automobile, en forme de profilé creux (2),
- dans lequel le profilé creux (2) présente au moins une région périphérique (4) dans laquelle la paroi du profilé creux (4) présente un décrochement (5) saillant sensiblement en forme de manchon ou de marche,
- le décrochement (5) étant réalisé sous forme de point de rupture qui se rompt en cas de collision sous l'effet d'une force de collision prédéterminée (6),
- les parties du profilé creux (2', 2") produites en cas de collision pouvant s'emboîter les unes dans les autres de manière télescopique et absorbant l'énergie dans la région du décrochement (5), et
**caractérisé en ce que**
la partie du profilé creux (2) qui s'emboîte possède un diamètre extérieur qui est supérieur ou égal à celui de la portion de la partie du profilé creux (2) la recevant, située en dehors de la région de décrochement élargie.

2. Elément d'absorption de chocs selon la revendication 1,
**caractérisé en ce que**
une section transversale (d) du profilé creux (2) est élargie d'un côté du décrochement (5) et/ou est rétrécie de l'autre côté du décrochement (5).

3. Elément d'absorption de chocs selon la revendication 1 ou 2,
**caractérisé en ce que**
le point de rupture est réalisé de telle sorte que l'élément d'absorption de chocs (1) se déforme élastiquement jusqu'à ce que la force de collision (6) soit atteinte, puis il se déforme par contre plastiquement au-dessus de la force de collision (6).

4. Elément d'absorption de chocs selon l'une quelconque des revendications 1 à 3,
**caractérisé en ce que**
la mesure (wᵥ) du décrochement (5) est une fraction de l'épaisseur de la paroi (w).

5. Elément d'absorption de chocs selon l'une quelconque des revendications 1 à 4,
**caractérisé en ce que**
le profilé creux (2) est réalisé sous forme de partie d'une structure de support d'un véhicule automobile.

6. Elément d'absorption de chocs selon l'une quelconque des revendications 1 à 5,
**caractérisé en ce que**
le profilé creux (2) est réalisé sous forme de support pour un agencement de pare-chocs.

7. Elément d'absorption de chocs selon l'une quelconque des revendications 1 à 6,
**caractérisé en ce que**
le profilé creux (2) est fabriqué par formage interne sous haute pression.

8. Procédé de fabrication d'un élément d'absorption de chocs selon l'une quelconque des revendications 1 à 7,
**caractérisé en ce que**
l'élément d'absorption de chocs (1) est produit par formage interne sous haute pression d'une ébauche de profilé creux.
